# EUROPEAN PATENT APPLICATION

(11) **EP 4 431 852 A1**
(43) Date of publication of application: **18.09.2024**
(21) Application number: 23795988.7
(22) Date of filing: 28.03.2023
(51) Int. Cl.: F26B 17/10, F27B 15/10, B01J 8/44

(54) **DISTRIBUTION PLATE FOR FORMING FLUIDIZED BED, AND FLUIDIZED BED DRYER**

(30) Priority: 27.04.2022 JP 2022073476
(71) Applicant: Nara Machinery Co., Ltd., Tokyo 140-0011 (JP)
(72) Inventor: TAKASHIMA, Hisatsugu, Tokyo 143-0002 (JP); IWAMOTO, Daisuke, Tokyo 143-0002 (JP); HANEDA, Toshiki, Tokyo 143-0002 (JP)
(74) Representative: Stolmár & Partner Patentanwälte PartG mbB
(86) International application number: PCT/JP2023/012390
(87) International publication number: WO 2023/210241

(57) **Abstract**

Provided is a distribution plate used for forming a fluidized bed in a reactor such as a dryer or incinerator, the distribution plate exhibiting enhanced drying efficiency and operational efficiency, by achieving both dischargeability at the end of operation, and stable fluidized bed formation during operation. A distribution plate 1 for forming a fluidized bed is made up of a base plate 2, a plurality of small holes 3 provided in the base plate, and a chimney deck in which respective chimneys 4 are disposed in the small holes. Each chimney has a slit-shaped first opening portion 7A opened in a predetermined direction, and a second opening portion 7B opened in a different direction at a height position above the first opening portion.

## Description

### [Technical Field]

The present invention relates to a distribution plate used for forming a fluidized bed of a granular material in reactors in a broad sense such as dryers, coolers and incinerators, and to a fluidized bed dryer that utilizes such a distribution plate.

### [Background Art]

A fluidized bed dryer blows hot air up from a distribution plate such as a perforated plate, to thereby bring a granular starting material into a fluidized state, and efficiently accomplish, as a result, both contact with hot air and movement of evaporated matter. In consequence, the dryer is a device exhibiting favorable drying efficiency, and also is advantageous in terms of ease of maintenance as the dryer has no movable parts in a main body thereof.

PTL 1 indicates that upon opening of small holes of arbitrary shape in a material flat plate as a perforated plate of a fluidized bed dryer, a member corresponding to the holes in the material flat plate is deformed so that there are open areas, as well as roof-like ridges that cover the holes, and projections below the open areas, and such that open areas are set to face in a direction of flow of a powder. A perforated plate having such a configuration is advantageous in terms of making it possible to prevent a granular starting material from falling under the perforated plate, and in terms of allowing a direction of blow-up of the granular starting material to be freely selected beforehand.

PTL 2 discloses a gas-blowing perforated plate for fluidized beds, wherein mesh openings having an opening on a side surface in one direction and mesh openings having an opening in a side surface in an opposite direction to that of the former mesh openings are disposed in a form of multiple pairs in a metal plate, and wherein an opening portion area of mesh openings having an opening on one side surface in the one direction is set to be in a range from 1.1 to 1.5 times the opening portion area of the mesh openings having an opening on a side surface in the opposite direction. PTL 2 indicates that in the above gas-blowing perforated plate for fluidized beds, an air slide phenomenon is suppressed even when the plate is used under high pressure loss conditions (thick powder bed conditions), such that the plate affords a minimum necessary horizontal vector (propulsion effect) that enables complete and fast discharge of in-bed powder at the end of operation.

The specification of PTL 2 indicates that a perforated plate having slit-like openings facing in one direction is available, as a conventional perforated plate, with a view to eliciting smooth discharge of the in-bed powder at the end of operation. However, when such a perforated plate is used in a large (high) pressure loss region, strong horizontal airflow comparable to or stronger than that of air slide is formed above the perforated plate, and, as a result, the powder inputted into the bed is blown forward by this horizontal airflow, so that it is very difficult to form a fluidized powder bed at an inlet section. By contrast when air is blown into the perforated plate of the invention having the above two-direction mesh openings, air ejected from the mesh openings in one direction and air ejected from the mesh openings an opposite direction that runs counter to the former direction, collide with each other within the fluidized bed, and left and right vectors cancel each other out, yielding a horizontal vector that is proportional to the difference between the amount of air ejected from the mesh openings in the one direction and the amount of air ejected from the mesh openings in the opposite direction that runs counter to the former direction, such that most of the resulting airflow takes on an upward vector.

PTL 3 discloses an air distribution apparatus in a fluidized bed incinerator, the apparatus being provided with a plurality of air distribution blocks made of a fireproof material, and a perforated plate disposed beneath the air distribution blocks, wherein air blowout ports of the air distribution blocks are oriented in a substantially horizontal direction, and airflow channels in the air distribution blocks have a substantially uniform cross-sectional area, with no constriction at an intermediate point thereof; the perforated plate is made up of plurality of tiers of perforated single plates disposed substantially parallel across respective gaps in a height direction; and small holes of adjacent perforated single plates in respective tiers are spaced apart by a horizontal distance such that the small holes do not overlap each other in a vertical direction. PTL 3 indicates that uniform dispersion can be accomplished, free of clogging, and without concern of corrosion, by using such an air distribution apparatus.

PTL 4 discloses an air cap provided on a blower plate that is used in a circulating fluidized bed boiler system. This air cap includes a cap body and a cap; the cap body has a spiral exhaust port, the cap has an arc-shaped cross-sectional shape, a mesh blocking sheet is provided on the spiral exhaust port, and the opening diameter of the cap body is larger than the diameter of vent holes. PTL 4 indicates that by using such an air cap, spiral airflow can be formed at the spiral exhaust port formed in the cap body, airflow can be distributed uniformly at the same time, and foreign matter (for instance coal slag produced as a result of coal combustion, unburned coal and the like) can be effectively blocked by the mesh blocking sheet at the exhaust port and the cap.

### [Citation List]

### [Patent Literature]

[PTL 1] Japanese Examined Patent Application Publication No. S49-34901
[PTL 2] Japanese Patent Application Publication No. H09-89457
[PTL 3] Japanese Examined Utility Model Application Publication No. S60-9558
[PTL 4] Chinese Patent No. 108167824

### [Summary of Invention]

### [Technical Problem]

In the light of the above conventional art it is an object of the present invention to provide a distribution plate for forming a fluidized bed exhibiting yet higher drying efficiency and operational efficiency, by combining dischargeability of a granular material at the end of operation, and formation of a stable fluidized bed during operation.

### [Solution to Problem]

For the purpose of achieving the above goal, the present invention is a distribution plate for forming a fluidized bed, and a fluidized bed dryer, according to [1] to [8] below.
[1] A distribution plate for forming a fluidized bed, the distribution plate being used to form a fluidized bed of a granular material, wherein
   the distribution plate is made up of a base plate, a plurality of small holes provided in the base plate, and a chimney deck in which respective chimneys are disposed in the small holes; and
   each of the chimneys has a slit-shaped first opening portion opened in a predetermined direction, and a second opening portion opened in a different direction at a height position above the first opening portion.
[2] The distribution plate for forming a fluidized bed according to [1], wherein the base plate has a structure in which a heat insulating material is affixed to a sheet plate made of a metal.
[3] The distribution plate for forming a fluidized bed according to [1], wherein the chimney is made up of any one from among titanium, polytetrafluoroethylene (PTFE) and stainless steel.
[4] The distribution plate for forming a fluidized bed according to [1], wherein the chimney is made up of a cylindrical column portion, and a roof portion that plugs an upper end opening of the column portion, and the first opening portion and the second opening portion are formed in a peripheral wall of the column portion.
[5] The distribution plate for forming a fluidized bed according to [4], wherein the roof portion has a hollow structure therein.
[6] The distribution plate for forming a fluidized bed according to [1], wherein the second opening portion is slit-shaped.
[7] The distribution plate for forming a fluidized bed according to [1], wherein the first opening portion is formed, in the chimney, facing in a direction in which a discharge section of granular material is provided.
[8] A fluidized bed dryer, which utilizes the distribution plate for forming a fluidized bed according to any one of [1] to [7].

### [Advantageous Effects of Invention]

In the distribution plate of the present invention, the first opening portion and second opening portion formed in the chimney are formed to be at different heights and in different directions; hence, the vectors of airflow supplied from the respective opening portions do not cancel out, and the discharge function at the end of operation is brought out by the airflow of the opening portion that is closer to the base plate (the opening portion at a lower height), whereby phenomena such as air slide are less likely to occur during operation. As a result, such uniform airflow allows maintaining a stable fluidized bed, regardless of bed thickness, and allows improving drying efficiency and operational efficiency.

### [Brief Description of Drawings]

[Fig. 1]

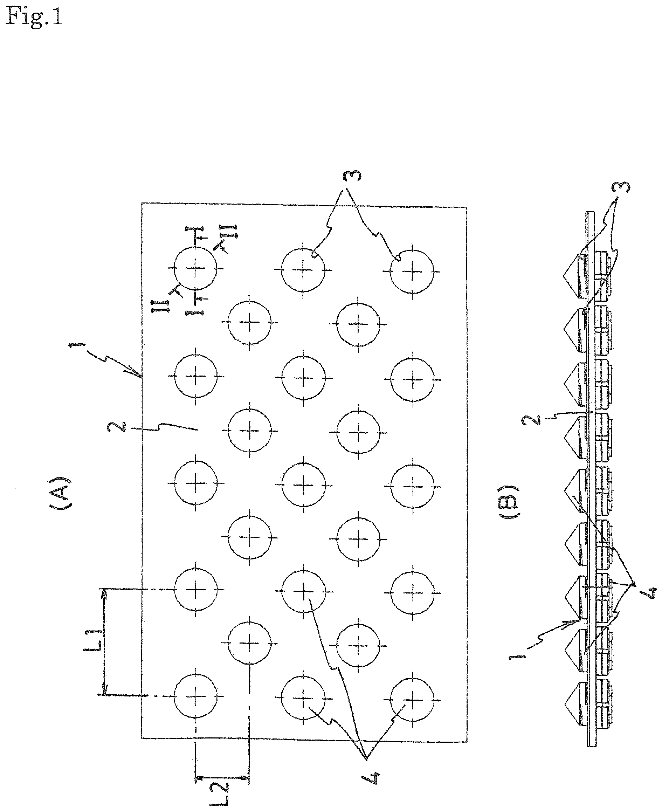

   Fig. 1 is a set of diagrams illustrating an embodiment of a distribution plate according to the present invention, where (A) is a plan-view diagram and (B) is a front-view diagram.
[Fig. 2]

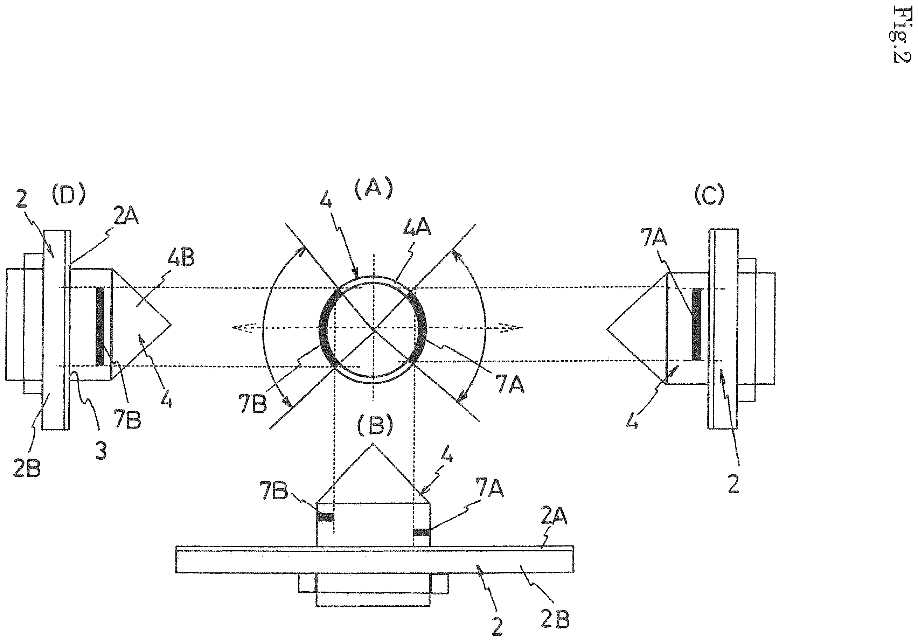

   Fig. 2 is a set of diagrams illustrating a basic positional relationship of a first opening portion and a second opening portion formed in a chimney, where (A) is a cross-sectional diagram with dissimilar cutting planes on the left and right, (B) is a front-view diagram, (C) is a right-view diagram, and (D) is a left-view diagram.
[Fig. 3]

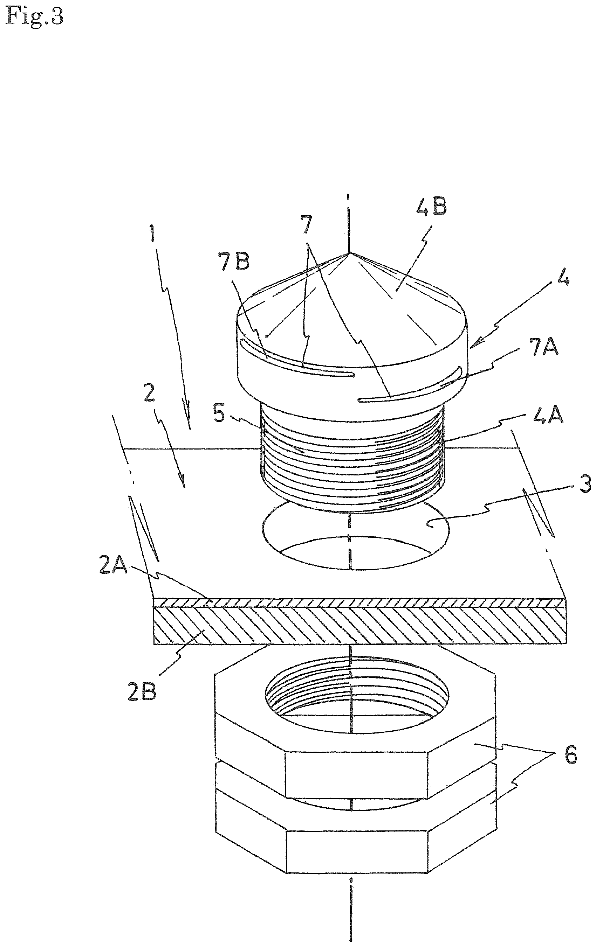

   Fig. 3 is a perspective-view diagram illustrating an embodiment of a chimney deck having a chimney disposed therein.
[Fig. 4]

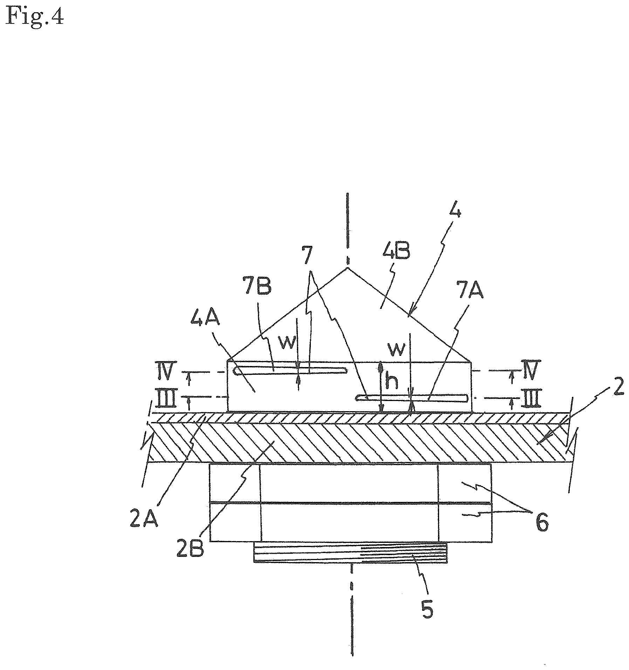

   Fig. 4 is a front-view diagram illustrating an embodiment of a chimney deck.
[Fig. 5]

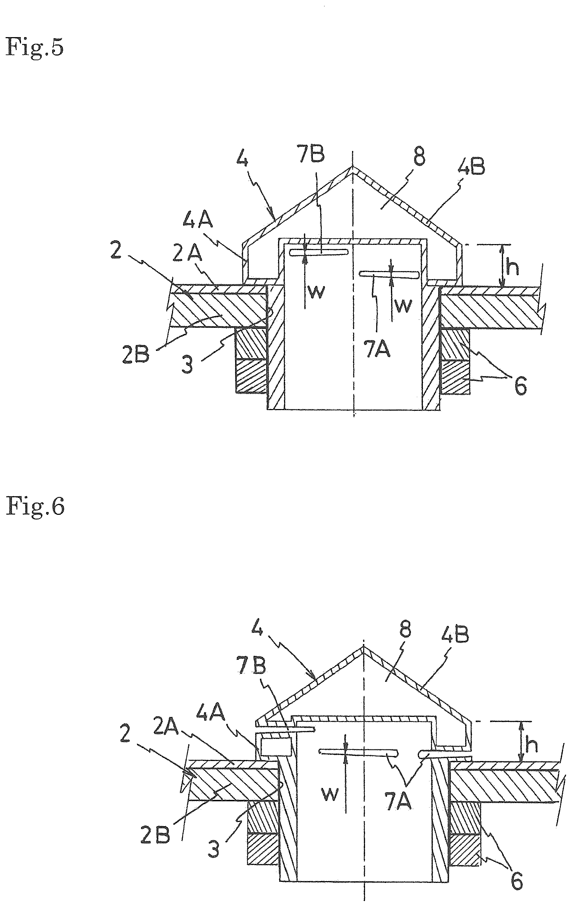

   Fig. 5 is an enlarged cross-sectional diagram of a portion of a chimney deck along line I-I of Fig. 1.
[Fig. 6]
   Fig. 6 is an enlarged cross-sectional diagram of a portion of a chimney deck along line II-II of Fig. 1.
[Fig. 7]

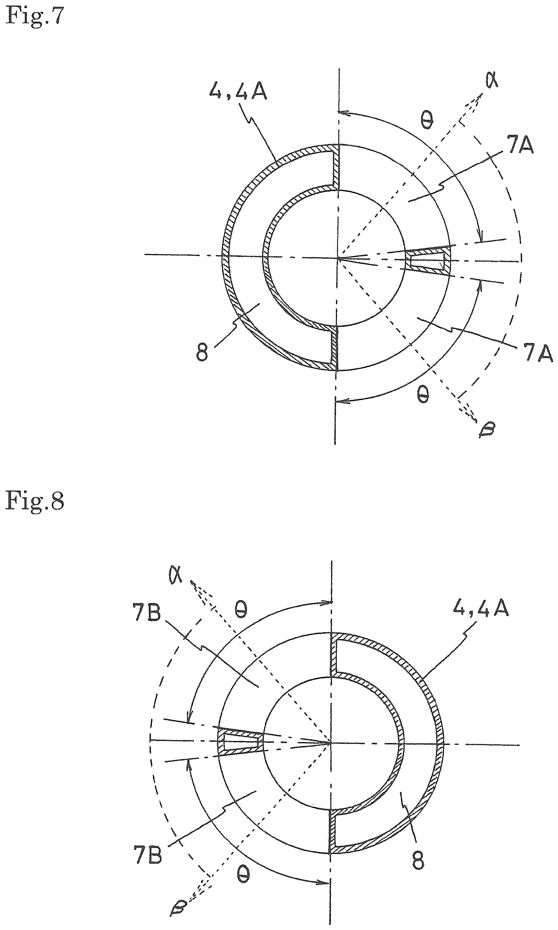

   Fig. 7 is a cross-sectional diagram of a portion of a chimney deck along line III-III of Fig. 4.
[Fig. 8]
   Fig. 8 is a cross-sectional diagram of a portion of a chimney deck along line IV-IV of Fig. 4.
[Fig. 9]

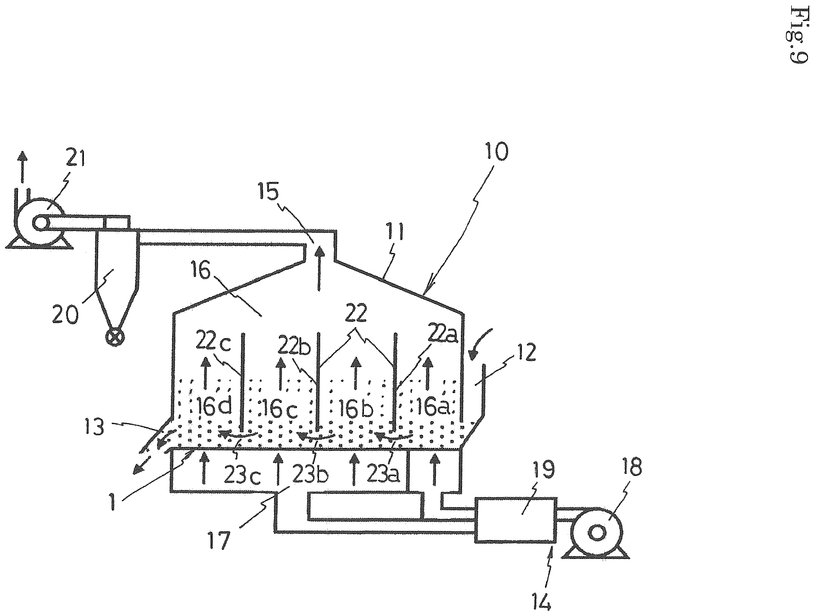

   Fig. 9 is a side-view diagram illustrating conceptually an embodiment of a fluidized bed dryer according to the present invention.

### [Description of Embodiments]

Embodiments of a distribution plate for forming a fluidized bed and a fluidized bed dryer according to the present invention will be described in detail next with reference to accompanying drawings.

Fig. 1 is a diagram illustrating an embodiment of a distribution plate according to the present invention. The distribution plate 1 according to the present invention is made up of a base plate 2, a plurality of small holes 3 drilled in the base plate 2, and chimneys 4 arranged in respective small holes 3. In the present embodiment a deck having a chimney (chimney structure) disposed thereon will be referred to as a chimney deck.

The base plate 2 has a structure in which a heat insulating material 2B is affixed to a sheet plate 2A (see Fig. 3). The sheet plate 2A is formed out of a metal flat plate, for instance of either stainless steel or carbon steel. Any material that is heat resistant and has a lower thermal conductivity than those of metals can be used in the heat insulating material 2B; for instance, the heat insulating material 2B can be formed out of perlite or glass wool. The thickness of the base plate 2 is designed to be optimal for instance depending on the type and size of the reactor that is used, and also on the materials of the sheet plate 2A and of the heat insulating material 2B that are used; there is thus no particular thickness limit. For instance the base plate 2 can be formed by laying up a perlite-containing heat insulating material 2B having a thickness from 20 to 30 mm on a sheet plate 2A made up of a stainless steel-made flat plate having a thickness of 5 to 10 mm.

Multiple small holes 3 are formed in the plate surface of the base plate 2, such that the small holes 3 run through the plate surface. It suffices that the small holes 3 be formed evenly, without bias or offset, on the plate surface of the base plate 2; the small holes 3 may be for instance arrayed in parallel rows, other than the staggered layout illustrated in Fig. 1. The size and spacing of the small holes 3 are designed to be optimal, for instance depending on the type and size of the reactor that is used. For instance circular small holes 4 having a diameter of 30 to 70 mm can be arranged in a staggered layout, with L1 illustrated in Fig. 1 in the range from 60 to 140 mm and L2 in the range from 30 to 50 mm.

A chimney deck is provided in which chimneys 4 are disposed in respective small holes 3. The chimneys 4 are formed out of a heat-resistant material, preferably using for instance titanium, polytetrafluoroethylene (PTFE) or stainless steel. Each chimney 4 is made up of a column portion 4A and a roof portion 4B that plugs the upper end opening of the column portion 4A (see Fig. 3 and Fig. 4). The column portion 4A and the roof portion 4B may be formed integrally with each other, or may be configured through joining of separate bodies. In the case of integral formation, the foregoing can be shaped by cutting or by 3D additive manufacturing using a 3D printer.

The shape of the chimneys 4 is determined by the shape of the small holes 3 drilled in the base plate 2; if the small holes 3 are circular, the chimneys 4 are formed having a cylindrical column portion 4A, whereas if the small holes 3 are square, the chimneys 4 are formed having a square tubular column portion 4A. The chimneys 4 can be inserted into respective small holes 3; herein the diameter of the cylindrical column portion 4A ranges for instance from 25 to 70 mm. From the viewpoint of heat insulation, preferably the chimneys 4 have, in the interior thereof, a hollow structure (double wall structure) having a closed space; in the embodiments illustrated in the figures, a column portion 4A at a site jutting above the roof portion 4B and the base plate 2 is formed to have a hollow structure (double wall structure) having a closed space 8 in the interior thereof (see Fig. 5 and Fig. 6).

The chimneys 4 are inserted into respective small holes 3 formed in the base plate 2, and are fixed to the base plate 2, to form a chimney deck. In the illustrated embodiment, a male thread 5 is formed on the outer peripheral surface of the lower portion of the cylindrical column portion 4A, such that each chimney 4 is fixed to the back side of the base plate 2 by lock nuts 6 that are screwed into the male thread 5 (see Fig. 3 and Fig. 4). However, the method of fixing the chimney 4 to the base plate 2 is not limited thereto.

Opening portions 7 are opened in the peripheral wall of the column portion 4A of the chimney 4 at sites jutting above the base plate 2 in which the small holes 3 are disposed. The opening portions 7 are formed into a first opening portion 7A and a second opening portion 7B at different formation heights and formation directions. That is, the first opening portion 7A and the second opening portion 7B are formed at dissimilar height positions, and so as to face in dissimilar directions (see Fig. 2 to Fig. 8).

Fig. 2 illustrates the basic positional relationship between the first opening portion 7A and the second opening portion 7B that are formed in the chimneys 4. As illustrated in Fig. 2, the first opening portion 7A is formed at a low height position, close to the plate surface of the base plate 2. The opening portions are formed in a direction such that that an opening center thereof faces right in Fig. 2. The second opening portion 7B is formed at a higher height position, above the first opening portion 7A, so that the opening center faces left in Fig. 2. The second opening portion 7B need only be formed at a higher height position than the first opening portion 7A, but preferably the second opening portion 7B is formed at a position higher by 5 mm or more, more preferably at a position higher by 10 mm or more, than that of the first opening portion 7A. Further, the opening directions of the first opening portion 7A and the second opening portion 7B need not match each other completely; in a most preferred implementation, as illustrated in Fig. 2, the directions of the opening portions are exactly opposite, and the angle ranges of the opening portions do not overlap each other.

The first opening portion 7A and the second opening portion 7B will be explained in more detail on the basis of the drawings of the embodiment of the chimneys 4 illustrated in Fig. 3 to Fig. 8.

The first opening portion 7A is preferably formed at a position not higher than h×(1/2), and preferably at a position not higher than h×(1/3) (see Fig. 4), where h denotes the height of the highest portion of the column portion 4A referred to the top face of the base plate 2. The shape of the first opening portion 7A is an elongated slit parallel to the base plate 2, from the viewpoint of discharge of a granular material at the end of operation. Slit width w of the slit-shaped first opening portion 7A is preferably from 1 to 5 mm, more preferably from 1 to 3 mm. The slit width w need not be uniform, and may be variable; for instance a slit shape may be adopted such that a temporary width w becomes narrower, for instance as in the embodiment illustrated in the figure. By prescribing a slit shape such that a temporary width w thereof becomes narrower it becomes possible to bring about a flow velocity distribution that is higher at a site of larger width than at a site of smaller width, so that airflow is caused to act strongly in a specific direction. In terms of slit length, in a case where the slit is formed on the peripheral wall of the cylindrical column portion 4A, then an angle θ about a central axis (angle about a centroid axis in a case where the column portion is not cylindrical) is preferably from 15 to 180 degrees, more preferably from 90 to 180 degrees (see Fig. 7). At least one first opening portion 7A having the above configuration is formed in the peripheral wall of the column portion 4A.

In the illustrated embodiment, two first opening portions 7A, 7A shaped as slits having a slit width w that temporarily narrows from 3 mm to 1 mm, at a position h×(1/4) from the base plate, and such that the slit length of the first opening portions 7A, 7A corresponds to 80 degrees in terms of angle θ about the central axis of the column portion 4A, are formed such that sides of large slit width w of the respective slit-shaped opening portions are set to be adjacent to the right peripheral wall of the cylindrical column portion 4A, and such that directions α, β pointing towards an opening center (θ×(1/2)) of the opening portion are offset from each other by 100 degrees (see Fig. 4 and Fig. 7). By dividing thus the opening portion into a plurality of sections, strength can be achieved even if the angle θ about the central axis is increased, and thus the chimney is not prone to deforming. Each first opening portion 7A is formed, in the peripheral wall of the of the cylindrical column portion 4A made up of a double wall, in the form of a passage such that the upper, lower, left and right ends between the double walls are plugged by wall bodies (see Fig. 6 and Fig. 7). The flow of air ejected from the opening portion can be rendered sharp and stable by configuring thus an opening portion having a passage.

The second opening portion 7B is formed at a position beyond h×(1/2) from the base plate, preferably at a position h×(2/3) or higher (see Fig. 4). The second opening portion 7B is formed above of the first opening portion 7A by 5 mm or more, preferably above the first opening portion 7A by 10 mm or more. Any shape can be adopted as the shape of the second opening portion 7B, so long as the second opening portion 7B is formed at a height position and in a direction so as not to interfere with the airflow discharged from the first opening portion 7A; as an example, the second opening portion 7B is shaped as an elongated slit parallel to the base plate 2.

At least one second opening portion 7B having the above configuration is disposed in a direction different from the opening direction of the first opening portion 7A (i.e. is disposed in the a direction such that the directions of the center lines of the angle ranges of the slit-shaped opening portions 7A, 7B, about the central axis of the column portion 4A, do not coincide with each other); most preferably, the opening portions are formed in opposite directions and such that the angle ranges of the opening portions do not overlap each other.

In the illustrated embodiment, two second opening portions 7B, 7B shaped as slits having a slit width w that temporarily narrows from 3 mm to 1 mm, at a position h×(3/4) of the column portion 4A and such that the slit length of the second opening portions 7B, 7B corresponds to an angle θ of 80 degrees about the central axis of the column portion 4A, are formed such that sides of large slit width w of the respective slit-shaped opening portions are set to be adjacent to the left peripheral wall, i.e. on the reverse side from that of the formation positions of the above two first opening portions 7A, 7A, and wherein directions α, β pointing towards an opening center (θ×(1/2)) of the opening portion are offset from each other by 100 degrees, the second opening portions 7B, 7B being formed in the opposite direction to that of the first opening portion 7A such that the angle ranges of the foregoing do not overlap each other (see Fig. 4 and Fig. 8). Each second opening portion 7B is formed, in the peripheral wall of the of the cylindrical column portion 4A made up of a double wall, in the form of a passage such that the upper, lower, left and right ends between the double walls are plugged by wall bodies (see Fig. 6 and Fig. 8).

The upper end opening of the column portion 4A in which the first opening portion 7A and second opening portion 7B are formed is plugged by the roof portion 4B. The roof portion 4B preferably has a top face formed in a conical shape, with an apex angle from 90 to 140 degrees, from the viewpoint of curtailing deposition of process product. In the illustrated embodiment, the roof portion 4B has a hollow structure having a closed space 8 inside a conical shape exhibiting an apex angle of 110 degrees, at the top face (see Fig. 5 and Fig. 6).

The chimneys 4 made up of the above column portion 4A and roof portion 4B are disposed in respective small holes 3 formed in the base plate 2, to thereby configure the distribution plate 1 having a chimney deck. Herein the first opening portions 7A provided in the chimneys 4 are disposed along the direction in which there is provided a discharge section of the reactor, in such a manner that airflow discharged from the opening portions 7A causes the process product to move towards the discharge section, at the end of operation.

In the distribution plate 1 according to the present invention explained above, the heat insulating material 2B is disposed on the base plate 2, and accordingly the process product is not prone to fuse, even when using high-temperature airflow. In a case in particular where the chimneys 4 have a hollow structure (double wall structure) having a closed space 8 in the interior thereof, as in the present embodiment, heat insulation properties are further improved, and a distribution plate is achieved in which process product fusion is unlikely to occur. The first opening portion 7A and the second opening portion 7B formed in the chimneys 4 are formed at different heights and in different directions, and accordingly the vectors of airflow supplied from the respective opening portions contribute to forming a fluidized bed without canceling each other out, such that a discharge function at the end of operation is elicited by airflow at the opening portion (first opening portion 7A at a lower height) standing closer to the base plate 2, whereas phenomena such as air slide are unlikelier to occur during operation. Therefore, a stable fluidized bed can be maintained at any bed thickness, which allows improving drying efficiency and operational efficiency.

In the perforated plate of PTL 2 cited above as background art, by contrast, the air slide phenomenon is somewhat suppressed by relying on airflows, as a pair thereof, in opposite directions; however, a sufficient discharge action cannot be obtained in terms of in-bed powder discharge at the end of operation. The air slide phenomenon occurs in a case where one of the mesh openings is further widened in order to achieve a sufficient discharge action. Accordingly, the above does not constitute a solution to the problem of achieving both stable fluidized bed formation and dischargeability at the end of operation.

A fluidized bed dryer boasting good drying efficiency and good operational efficiency can be provided by using the above-described distribution plate 1 according to the present invention in a dryer, which is a type of reactor. Fig. 9 is a side-view diagram conceptually illustrating an embodiment of a fluidized bed dryer that utilizes the above distribution plate 1 according to the present invention. The illustrated fluidized bed dryer 10 has a drying container 11, a treated granular material inlet 12, a treated granular material outlet 13, a fluidized airflow supply section 14, and an outlet 15.

The drying container 11 has a hollow box shape, and has the treated granular material inlet 12 formed at one end, and the treated granular material outlet 13 at the bottom of the other end. In this case, one from among the treated granular material inlet 12 and the treated granular material outlet 13 may each be provided at a respective end of the drying container 11; however, one or both of the foregoing may be provided in multiple numbers. A granular material in a wet state is continuously supplied into the drying container 11 through the treated granular material inlet 12, by a feeder not shown. From the interior of drying container 11, the dried granular material is discharged for instance to a recovery hopper, not shown, via the treated granular material outlet 13.

The interior of the drying container 11 is divided into an upper drying chamber 16 and a lower hot air chamber 17, by providing the above distribution plate 1 according to the present invention at a predetermined distance from the bottom. Herein the first opening portion 7A provided in the distribution plate 1 is disposed so that the opening center of the first opening portion 7A is directed towards the treated granular material outlet 13 formed in the drying container 11, in such a manner that airflow discharged from the opening portion 7A at the end of operation causes the treated granular material to move towards a discharge section of the device. The fluidized airflow supply section 14 is connected to the hot air chamber 17 demarcated at the bottom of the drying container 11, and the outlet 15 for discharging generated gas and fluidized airflow is formed at the ceiling of the drying chamber 16 demarcated at the top of the drying container 11. The fluidized airflow supply section 14 can be configured out of a blower 18 and a heater 19. The outlet 15 is connected to an exhaust fan 21 via a cyclone 20.

The drying chamber 16 of the drying container 11 is divided, into a plurality of chambers (four chambers in the illustrated embodiment) in the flow direction of the treated granular material, by multiple (three in the illustrated embodiment) partition plates 22. Partition plates 22a, 22b, 22c are disposed along a vertical direction that is perpendicular to the flow direction of the treated granular material, the partition plates 22a, 22b, 22c being disposed at predetermined intervals in the flow direction of the treated granular material; herein the left and right ends of the partition plates 22a, 22b, 22c are mounted on the inner wall surface of the drying container 11, and the lower ends are positioned leaving a predetermined gap with the distribution plate 1, such that between the partition plates 22a, 22b, 22c and the distribution plate 1 there are secured passage opening portions 23a, 23b, 23c of the treated granular material.

As described above, the partition plates 22a, 22b, 22c are provided in the drying container 11, to demarcate the drying container 11 into a first drying chamber 16a, a second drying chamber 16b, a third drying chamber 16c, and fourth drying chamber 16d. Herein the first drying chamber 16a constitutes a region (preheating drying region) in which the granular material is initially dried. The second and third drying chambers 16b, 16c are regions (constant-rate drying regions) for performing intermediate drying of the granular material. The fourth drying chamber 16d is a region (reduction-rate drying region) in which the granular material is subjected to latter-stage drying.

In the fluidized bed dryer 10 the granular material is supplied from the treated granular material inlet 12, while fluidized airflow is supplied from the fluidized airflow supply section 14 to the drying chamber 16 through the hot air chamber 17 and the distribution plate 1, as a result of which a fluidized bed of predetermined thickness becomes formed above the distribution plate 1. The granular material supplied from the treated granular material inlet 12 is brought to a fluidized state by airflow ejected from the first opening portion 7A and second opening portion 7B formed in distribution plate 1; as a result, contact with hot air and movement of evaporated matter are both accomplished efficiently, and the material undergoes an efficient drying treatment as the material moves through the first drying chamber 16a, the second drying chamber 16b, the third drying chamber 16c and the fourth drying chamber 16d, to be discharged from the treated granular material outlet 13. Herein the first opening portion 7A and second opening portion 7B formed in the chimneys 4 are formed at dissimilar heights and in different directions, and accordingly the vectors of airflow supplied from the respective opening portions contribute to forming a fluidized bed without canceling each other out, such that a discharge function at the end of operation is elicited by airflow at the opening portion (first opening portion 7A at a lower height) standing closer to the base plate 2, and phenomena such as air slide are unlikelier to occur during operation. Therefore, a stable fluidized bed can be maintained at any bed thickness, which allows improving drying efficiency and operational efficiency.

Embodiments of the distribution plate for forming a fluidized bed and a fluidized bed dryer of the present invention have been described above; however, the present invention is not limited to any of the embodiments described above, and can accommodate, as a matter of course, various alterations and modifications within the scope of the technical idea of the present invention as set forth in the appended claims.

### [Industrial Applicability]

The distribution plate for forming a fluidized bed according to the present invention can be widely used for forming a fluidized bed in reactors such as dryers and incinerators.

### Reference Signs List

- 1: Distribution plate
- 2: Base plate
- 2A: Sheet plate
- 2B: Heat insulating material
- 3: Small hole
- 4: Chimney
- 4A: Column portion
- 4B: Roof portion
- 5: Male thread
- 6: Lock nut
- 7: Opening portion
- 7A: First opening portion
- 7B: Second opening portion
- 8: Closed space
- 10: Fluidized bed dryer
- 11: Drying container
- 12: Treated granular material inlet
- 13: Treated granular material outlet
- 14: Fluidized airflow supply section
- 15: Outlet
- 16: Drying chamber
- 16a to 16d: First to fourth drying chambers
- 17: Hot air chamber
- 18: Blower
- 19: Heater
- 20: Cyclone
- 21: Exhaust fan
- 22, 22a to 22c: Partition plate
- 23a to 23c: Passage opening

## Claims

1. A distribution plate for forming a fluidized bed, the distribution plate being used to form a fluidized bed of a granular material, wherein
the distribution plate is made up of a base plate, a plurality of small holes provided in the base plate, and a chimney deck in which respective chimneys are disposed in the small holes,
each of the chimneys has a slit-shaped first opening portion opened in a predetermined direction, and a second opening portion opened in a different direction at a height position above the first opening portion.

2. The distribution plate for forming a fluidized bed according to claim 1, wherein the base plate has a structure in which a heat insulating material is affixed to a sheet plate made of a metal.

3. The distribution plate for forming a fluidized bed according to claim 1, wherein the chimney is made up of any one from among titanium, polytetrafluoroethylene (PTFE) and stainless steel.

4. The distribution plate for forming a fluidized bed according to claim 1, wherein the chimney is made up of a cylindrical column portion, and a roof portion that plugs an upper end opening of the column portion, and the first opening portion and the second opening portion are formed in a peripheral wall of the column portion.

5. The distribution plate for forming a fluidized bed according to claim 4, wherein the roof portion has a hollow structure therein.

6. The distribution plate for forming a fluidized bed according to claim 1, wherein the second opening portion is slit-shaped.

7. The distribution plate for forming a fluidized bed according to claim 1, wherein the first opening portion is formed, in the chimney, facing in a direction in which a discharge section of granular material is provided.

8. A fluidized bed dryer, which utilizes the distribution plate for forming a fluidized bed according to any one of claims 1 to 7.
